# EUROPÄISCHE PATENTSCHRIFT

(11) **EP 0 650 423 B1**
(45) Veröffentlichungstag und Bekanntmachung des Hinweises auf die Patenterteilung: **15.07.1998**
(21) Anmeldenummer: 94912456.4
(22) Anmeldetag: 15.04.1994
(51) Int. Cl.: B60R 16/02

(54) **ELEKTRISCHES GERÄT, INSBESONDERE SCHALT- UND STEUERGERÄT FÜR KRAFTFAHRZEUGE**
ELECTRICAL DEVICE, ESPECIALLY A SWITCHING AND CONTROL DEVICE FOR MOTOR VEHICLES
APPAREIL ELECTRIQUE, NOTAMMENT APPAREIL DE COMMUTATION ET DE COMMANDE POUR VEHICULES AUTOMOBILES

(30) Priorität: 27.04.1993 DE 4313429
(43) Veröffentlichungstag der Anmeldung: 03.05.1995
(73) Patentinhaber: ROBERT BOSCH GMBH, 70442 Stuttgart (DE)
(72) Erfinder: JAKOB, Gert, D-70378 Stuttgart (DE); LIEGL, Erwin, D-71735 Eberdingen-Hochdorf (DE); LUZ, Siegbert, D-71336 Waiblingen-Neustadt (DE); BOHMWETSCH, Gerd, D-71672 Marbach (DE); ZYWIETZ, Martin, D-71642 Ludwigsburg (DE)
(86) Internationale Anmeldenummer: DE9400416
(87) Internationale Veröffentlichungsnummer: WO9425310

(56) Entgegenhaltungen:
- WO-A-92/02116
- DE-U- 8 430 486
- FR-A- 2 483 730
- US-A- 4 500 943
- US-A- 4 668 873

## Beschreibung

### Stand der Technik

Die Erfindung betrifft ein elektrisches Gerät, insbesondere ein Schalt- und Steuergerät für Kraftfahrzeuge, mit den Merkmalen des unabhängigen Anspruchs. Beispielsweise ist aus dem nicht vorveröffentlichten DE 92 00 624 U1 ein Gerät bekannt, das im Hinblick auf seinen mechanischen Aufbau sehr einfach ausgebildet und daher kostengünstig herzustellen ist. Dabei besteht das elektrische Gerät im wesentlichen aus drei Hauptbauelementen, einer bestückten Leiterplatte (mit Steckerleiste), einem Gehäuseboden und einem Gehäusedeckel. Dabei haben der Gehäuseboden und der Gehäusedeckel jeweils einen durchgehenden kragenförmigen Rand. Mit diesen Rändern liegen der Gehäuseboden und der Gehäusedeckel an der Unterseite bzw. Oberseite der Leiterplatte im Bereich ihres Außenrandes an. Dadurch wird die Leiterplatte zwischen Gehäuseboden und Gehäusedeckel eingeklemmt bzw. fixiert. Zur festen und sicheren Verbindung der beiden Gehäuseteile und zur Lagesicherung der Leiterplatte sind diese drei Bauteile im Bereich der kragenförmigen Ränder der Gehäuseteile fest miteinander verbunden. Diese Verbindung kann kostengünstig und fertigungstechnisch einfach durch eine Bördelung erfolgen. Ein derartiger Gehäuseaufbau hat den Nachteil, daß auf der Leiterplatte erhebliche Tabuflächen für die Auflage der Gehäuseteile und deren Verbindung beansprucht werden. Die Gesamtfläche der Leiterplatte ist daher relativ groß im Verhältnis zu der für die Bestückung und Unterbringung von Schaltungsbauelementen verfügbaren Innenfläche der Leiterplatte. Da im Bereich der Auflage der Gehäuseteile keine Schaltungselemente angeordnet werden können, beansprucht ein derartiges elektrisches Gerät eine verhältnismäßig große Grundfläche, verglichen zur schaltungstragenden, d.h. bestückten Fläche der Leiterplatte.

In der US-PS 4 668 873 ist ein elektrisches Gerät beschrieben, das einen umlaufenden Rand hat, auf dessen einer Stirnseite ein Gehäusedeckel und auf dessen anderer Stirnseite ein Gehäuseboden befestigt ist. An eine umlaufende Schulter des Randes ist im Inneren des Gehäuses eine Leiterplatte angeordnet. Alle drei Teile sind individuell mit einzelnen Schrauben am Rand befestigt. Der Aufbau dieses Gehäuses ist sehr aufwendig und teuer.

### Vorteile der Erfindung

Das erfindungsgemäße elektrische Gerät, insbesondere Schalt- und Steuergerät für Kraftfahrzeuge, mit den Merkmalen des unabhängigen Anspruchs hat den Vorteil, daß ein einfacher, kostengünstiger Gehäuseaufbau ermöglicht wird, wobei die beanspruchte Grundfläche des elektrischen Gerätes nur unwesentlich größer als die bestückte Fläche der Leiterplatte ist. Die zur Befestigung der Leiterplatte im Inneren des Gehäuses erforderlichen Tabuzonen auf der Leiterplatte sind minimal. Die Gehäuseabmessungen bzw. die Abmessungen des elektrischen Gerätes in der Leiterplattenebene sind nur unwesentlich größer als die für die Bestückung und Unterbringung der Schaltung erforderliche Leiterplattenfläche.

Durch die Ausbildung eines oder mehrerer Gehäuseteile als Stanzblechteil bzw. als tiefgezogenes Stanzblechteil ist eine fertigungstechnisch einfache und kostengünstige Bauteilherstellung möglich.

Insbesondere wenn die Verbindung der Gehäuseteile untereinander und mit der Leiterplatte durch eine Bördelung erfolgt, ergibt sich eine kostengünstige Herstellung bzw. ein einfacher Fertigungsvorgang, der ohne zusätzliche Befestigungsteile auskommt.

Durch die Ausbildung von parallel zur Leiterplattenoberfläche verlaufenden Abschnitten an den Gehäuseteilen ergeben sich in vorteilhafter Weise Auflagen für die Leiterplatte, durch die ein Abstand zu den übrigen Gehäuseflächen gewährleistet ist. Damit sind keine zusätzlichen Abstandselemente oder Fixierungen innerhalb des Gehäuses erforderlich. Diese Auflageabschnitte können gleichzeitig der Befestigung dienen. Dabei ist es möglich, diese Abschnitte entweder während eines maschinellen Befestigungs- bzw. Bördelvorganges auszubilden, oder diese während der Formgebung der Gehäuseteile direkt oder in einem Zwischenschritt vorzuformen.

Besonders vorteilhaft ist es, wenn die parallel zur Oberfläche der Leiterplatte verlaufenden Abschnitte der Gehäuseteile zur Auflage bzw. Befestigung der Leiterplatte in das Innere des Gehäuses weisen. Damit ist gewährleiset, daß die äußeren Abmessungen des elektrischen Gerätes im Bereich der flächigen Leiterplattenerstreckung nur unwesentlich größer als die entsprechenden Abmessungen der Leiterplatte sind. Die Seitenwände des Gehäuses können damit in unmittelbarer Nähe des Außenrandes der Leiterplatte verlaufen.

Weitere Vorteile und vorteilhafte Weiterbildungen der Erfindung ergeben sich aus den Unteransprüchen und der Beschreibung.

### Zeichnung

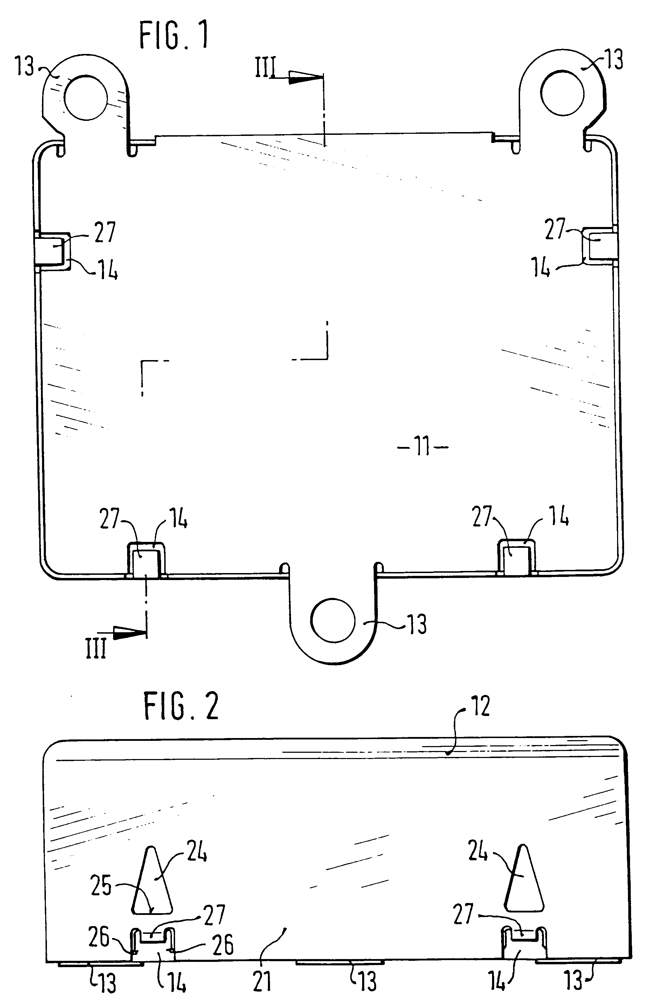

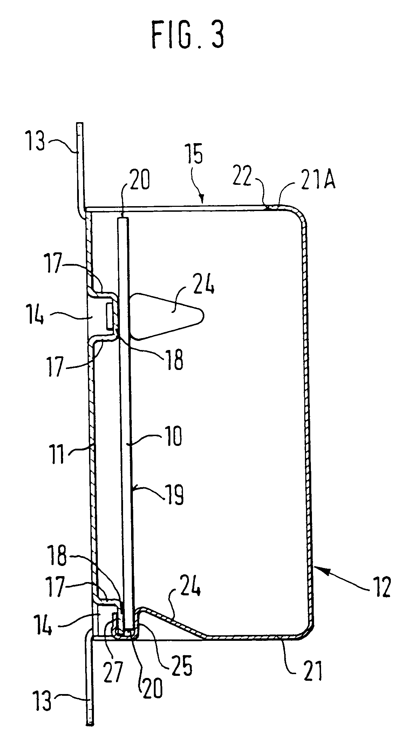

Ein Ausführungsbeispiel der Erfindung ist in der nachfolgenden Beschreibung und Zeichnung näher erläutert. Letztere zeigt in Figur 1 eine Ansicht des elektrischen Gerätes von der Unterseite, in Figur 2 eine Seitenansicht. Figur 3 zeigt einen Schnitt längs III-III nach Figur 1.

### Beschreibung des Ausführungsbeispiels

In den Figuren 1 bis 3 ist ein elektrisches Gerät dargestellt, das sich im wesentlichen aus drei Hauptbauelementen zusammensetzt, einer Leiterplatte 10, einem Gehäuseboden 11 und einem Gehäusedeckel 12. Die Leiterplatte 10 ist ein an sich bekannter Schaltungsträger und kann als Einlagen- oder Zweilagenleiterplatte oder als Multilayerleiterplatte ausgebildet sein. Die Leiterplatte 10 kann darüberhinaus auch ein Keramiksubstrat bzw. ein Schaltungsträger in Hybridbauweise sein. Es ist weiterhin möglich die Leiterplatte 10 als Leiterfolie auszubilden, die über geeignete Mittel biegesteif ausgebildet ist. Dazu kann die Leiterfolie selbst biegesteif sein oder auf eine geeignete Trägerstruktur auflaminiert sein. Die Leiterplatte 10 ist in Figur 3 unbestückt dargestellt trägt jedoch im Fertigzustand des elektrischen Gerätes eine elektronische Schaltung mit entsprechenden Leiterstrukturen. Zu dieser elektronischen Schaltung können auch diskrete und/oder integrierte Schaltungsbauelemente gehören. Desweiteren ist diese Schaltung über eine nicht dargestellte Steckeranordnung oder entsprechende elektrische Verbindungsmittel von außen kontaktierbar.

Das Gehäuse aus Gehäuseboden 11 und Gehäusedeckel 12 sowie die Leiterplatte 10 haben in diesem Ausführungsbeispiel eine im wesentlichen rechteckige Grundfläche. Die Abmessungen (Länge, Breite) des Gehäusebodens 11 sind jeweils um einen geringen Betrag größer als die entsprechenden Abmessungen der Leiterplatte 10, es ist jedoch auch möglich, diese Abmessungen zumindestens näherungsweise gleich zu machen, wobei dann Leiterplatte 10 und Gehäuseboden 11 annähernd deckungsgleich sind. Der Gehäuseboden 11 hat mehrere (hier im Ausführungsbeispiel drei) nach unten versetzte und nach außen ragende Befestigungslaschen 13, mit deren Hilfe das elektrische Gerät am Einbauort angebracht werden kann. Darüberhinaus sind im Gehäuseboden 11 im Bereich seines Außenrandes mehrere Auflageabschnitte 14 für die Leiterplatte 10 ausgebildet. Diese Auflageabschnitte 14 sind in diesem Ausführungsbeispiel an drei Seiten des Gehäusebodens 11 ausgebildet, wobei die Vorderseite 15 keine Auflageabschnitte aufweist. Es ist jedoch auch möglich, diese Auflageabschnitte an allen vier Randseiten des Gehäusebodens 11 auszubilden, oder auch nur an zwei Gehäuseseiten. Diese sollten dann jedoch vorteilhafterweise einander gegenüberliegen.

Der Gehäuseboden 11 ist als Stanzblechteil ausgebildet wobei die Auflageabschnitte 14 durch einen geeigneten Formvorgang (z.B. Tiefziehen) ausgebildet sind. Diese Auflageabschnitte 14 bilden nach unten und zur Außenseite des Gehausebodens 11 offene Kammern mit drei Seitenwänden 17 und einem Oberteil 18.

Die Leiterplatte 10 ist auf den Gehäuseboden 11 aufgelegt, ohne diesen zu überragen. Dazu liegt die Leiterplatte 10 im Bereich ihres Außenrandes auf den Oberteilen 18 der Auflageabschnitte 14 auf. Dabei ist die flächige Erstreckung von Oberteil 18 und Leiterplatte 10 zumindestens näherungsweise parallel.

Die Leiterplatte 10 wird an ihrer Oberseite 19 und ihren Seitenrändern 20 vom haubenartigen Gehäusedeckel 12 umfaßt. Dieser Gehäusedeckel 12 ist so ausgebildet, daß er die - nicht dargestellten - Schaltungsbauelemente der Leiterplatte 10 berührungsfrei umfaßt. Im hier dargestellten Ausführungsbeispiel verlaufen die Seitenwände 21 des Gehäusedeckels 12 mit geringem Abstand zur Leiterplatte 10 und umfassen den Gehäuseboden 11 bündig. Dabei liegt der Gehäusedeckel 12 mit seiner Unterseite auf den Befestigunglaschen 13 auf, wodurch eine genaue räumliche Zuordnung möglich ist. Es ist auch möglich den Gehäusedeckel 12 so auszubilden, daß er die Leiterplatte 10 bündig umfaßt, insbesondere wenn diese im Bereich ihrer Außenränder 20 keine leitenden Elemente aufweist.

Die im Bereich der Vorderseite 15 verlaufende Seitenwand 21A des Gehäusedeckels 12 hat eine Gehäuseöffnung 22, durch die die zuvor beschriebenen, nicht dargestellten, Leitungsverbindungen bzw. Steckverbindungselemente ragen.

Der Gehäusedeckel 12 hat an seinen Seitenwänden 21 im Bereich der Auflageabschnitte 14 des Gehäusebodens 11 befindliche keilförmig bzw. nasenförmig nach innen eingebogene Befestigungsabschnitte 24. Diese Befestigungsabschnitte 24 sind kammerartig ausgebildet und nach außen offen. Dabei weisen sie ein Unterteil 25 auf, das etwa parallel zur Leiterplattenoberfläche verläuft und auf der Oberseite 19 der Leiterplatte 10 aufliegt. Dieses Unterteil 25 des jeweiligen Befestigungsabschnittes 24 entspricht in seinen Abmessungen etwa denen des Oberteils 18 des gegenüberliegenden Auflageabschnittes 14. Unterhalb der Befestigungsabschnitte 24 ist jeweils durch zwei etwa parallele Einschnitte 26 vom Rand der Seitenwand 21 ausgehend ein Bördelabschnitt 27 ausgebildet. Der Abstand der beiden Einschnitte 26 ist etwas kleiner als der Abstand der beiden einander gegenüberliegenden Seitenwände 17 des jeweiligen Auflageabschnittes 14.

Diese Einschnitte 26 reichen vom Rand bzw. der Unterseite der Seitenwände 21 bis etwa in die Höhe des Oberteils 18 des Auflageabschnittes 14. Der durch die beiden Einschnitte 26 gebildete Bördelabschnitt 27 ist unterhalb des Oberteils 18 nach innen in die Kammer des Auflageabschnittes 14 eingebogen und liegt an der Unterseite des Oberteils 18 an. Durch dieses Umbördeln werden der Gehäusedeckel 12 und der Gehäuseboden 11 fest miteinander verbunden, wobei die Leiterplatte 10 zwischen den beiden Gehäuseteilen, d.h. zwischen dem Befestigungsabschnitt 24 und dem Auflageabschnitt 14 eingeklemmt ist.

Der Gehäusedeckel 12 kann auf kostengünstige Weise ebenfalls als Stanzblechteil hergestellt werden, z.B. durch einen Tiefziehvorgang. Dabei können die Befestigungsabschnitte 24 in einem Zwischenschritt vor dem eigentlichen Verbinden des Gehäusedeckels 12 mit dem Gehäuseboden 11 vorgeformt werden. Es ist jedoch auch möglich, die Befestigungsabschnitte erst beim Erstellen der eigentlichen Verbindung (hier im Ausführungsbeispiel beim Bördeln) einzubringen bzw. auszubilden.

Anstelle der Bördelverbindung im Bereich der Befestigungsabschnite 24 bzw. Auflageabschnitte 14 kann die Verbindung zwischen Gehäuseboden 11, Gehäusedeckel 12 und Leiterplatte 10 auch durch andere geeignete Verbindungstechniken bzw. Verbindungsmittel wie Kleben, Löten, mittels Schrauben oder Nieten, durch Rastelemente bzw. Klammer- oder Federelemente oder andere erfolgen. Das Nutzen der Bördelverbindung hat jedoch den Vorteil, daß der Bördelabschnitt 27 bereits beim Formprozeß des Gehäusedeckels 12 vorgeformt werden kann, und daß weiterhin keine zusätzlichen Befestigungselemente benötigt werden.

Die Abmessungen der Auflageabschnitte 14 und der gegenüberliegenden Befestigungsabschnitte 24 sind sehr viel kleiner als die entsprechenden Randabmessungen der Leiterplatte 10, d.h. es wird im Verhältnis zur jeweiligen Seitenlänge der Leiterplatte 10 nur ein sehr geringer Abschnitt des Leiterplattenrandes für das Auflager bzw. die Befestigung benötigt. Die Breite der Befestigungsabschnitte 24 und Auflageabschnitte 14 wird im wesentlichen durch die Formwerkzeuge vorgegeben und ist nahezu unabhängig von der entsprechenden Länge des Leiterplattenrandes.

Bei den in den Figuren 1 bis 3 nur qualitativ wiedergegebenen Abmessungen des elektrischen Gerätes sind die Randabmessungen im Bereich der Befestigungsabschnitte 24 bzw. Auflageabschnitte 14 weniger als 10% der Gesamtlänge des jeweiligen Leiterplattenrandes. Im Vergleich zur hier qualitativ dargestellten Leiterplattengröße werden nur ca. 2% der Leiterplattenoberfläche für die Verbindung und Auflage benötigt.

## Patentansprüche

1. Elektrisches Gerät, insbesondere Schalt- und Steuergerät für Kraftfahrzeuge mit mindestens einer Leiterplatte (10), die eine elektronische Schaltung trägt, una die in einen Gehäuse angeordnet ist, das mindestens aus einem Gehäusedeckel (12) und einem Gehäuseboden (11) besteht, wobei Gehäusedeckel (12), Gehäuseboden (11) und Leiterplatte (10) im Bereich ihrer Außenränder durch Verbindungsmittel fest miteinander verbunden sind, wobei die Verbindungsmittel zur Verbindung von Leiterplatte (10), Gehäuseboden (11) und Gehäusedeckel (12) an vereinzelten Verbindungsstellen (14, 24) am Rand der Leiterplatte (10) angeordnet sind, und die Randlänge der Verbindungsstellen (14, 24) klein ist im Verhältnis zur Gesamtrandlänge der Leiterplatte (10).

2. Elektrisches Gerät nach Anspruch 1, dadurch gekennzeichnet, daß die Verbindungsmittel aus umgebördelten Abschnitten (27) mindestens eines der beiden Gehäuseteile (Gehäuseboden 11, Gehäusedeckel 12) bestehen.

3. Elektrisches Gerät nach Anspruch 1 oder 2, dadurch gekennzeichnet, daß zumindestens eines der beiden Gehäuseteile (Gehäusedeckel 12, Gehäuseboden 11) als tiefgezogenes Stanzblechteil ausgebildet ist.

4. Elektrisches Gerät nach einem der Ansprüche 1 bis 3, dadurch gekennzeichnet, daß der Gehäusedeckel (12) und der Gehäuseboden (11) sowie die Leiterplatte (10) zumindestens im Bereich der Verbindungsmittel parallel verlaufende Abschnitte (18, 25) aufweisen, an denen sie aufeinanderliegen.

5. Elektrisches Gerät nach Anspruch 4, dadurch gekennzeichnet, daß die parallelen Abschnitte von Gehäusedeckel (12) und/oder Gehäuseboden (11) durch Abbiegen von Randbereichen des entsprechenden Gehäuseteils erstellt sind.

6. Elektrisches Gerät nach Anspruch 5, dadurch gekennzeichnet, daß die abgebogenen Randbereiche der Gehäuseteile zum Inneren des Gehäuses ragen.

7. Elektrisches Gerät nach einem der Ansprüche 1 bis 6, dadurch gekennzeichnet, daß der Gehäuseboden (11) und/oder der Gehäusedeckel (12) im Bereich der Verbindungsstellen nach außen offene Befestigungsabschnitte (24) oder Auflageabschnitte (14) aufweist.

## Claims

1. Electrical device, particularly a switching and control device, for vehicles having at least one circuit board (10) which carries an electronic circuit and which is arranged in a housing which, at least, consists of a housing cover (12) and a housing bottom (11), housing cover (12), housing bottom (11) and circuit board (10) being permanently joined to one another by joining means in the area of their outside edges, the joining means for joining circuit board (10), housing bottom (11) and housing cover (12) being arranged at individual joints (14, 24) at the edge of the circuit board (10), and the edge length of the joints (14, 24) being small in comparison with the total edge length of the circuit board (10).

2. Electrical device according to Claim 1, characterized in that the joining means consist of flanged-over sections (27) of at least one of the two housing parts (housing bottom 11, housing cover 12).

3. Electrical device according to Claim 1 or 2, characterized in that at least one of the two housing parts (housing cover 12, housing bottom 11) is constructed as deep-drawn stamped sheet metal part.

4. Electrical device according to one of Claims 1 to 3, characterized in that the housing cover (12) and the housing bottom (11) and the circuit board (10) exhibit, at least in the area of the joining means, parallel-extending sections (18, 25) at which they rest on one another.

5. Electrical device according to Claim 4, characterized in that the parallel sections of housing cover (12) and/or housing bottom (11) are created by bending away edge areas of the corresponding housing part.

6. Electrical device according to Claim 5, characterized in that the bent-away edge areas of the housing parts protrude towards the interior of the housing.

7. Electrical device according to one of Claims 1 to 6, characterized in that the housing bottom (11) and/or the housing cover (12) exhibit mounting sections (24) or support sectios (14) which are open towards the outside in the area of the joints.

## Revendications

1. Appareil électrique, en particulier appareil de branchement et de commande pour des véhicules à moteur, avec au moins une carte à circuit imprimé (10), qui porte un circuit électronique, et qui est disposé dans un boîtier, qui se compose au moins d'un couvercle de boîtier (12) et d'un fond de boîtier (11), le couvercle du boîtier (12), le fond du boîtier (11) et la carte à circuit imprimé (10) étant reliés de façon solidaire les uns aux autres dans la zone de leurs bords extérieurs par des moyens de liaison, les moyens de liaison servant à relier la carte à circuit imprimé (10), le fond du boîtier (11) et le couvercle du boîtier (12) étant disposés en des endroits individualisés de liaison (14, 24) sur le bord de la carte à circuit imprimé(10) et la longueur du bord des endroits de liaison (14, 24) étant petite par rapport à la longueur totale du bord de la carte à circuit imprimé (10).

2. Appareil électrique selon la revendication 1,
caractérisé en ce que
les moyens de liaison consistent en des sections serties (27) d'au moins l'une des deux parties du boîtier (fond du boîtier 11, couvercle du boîtier 12).

3. Appareil électrique selon la revendication 1 ou 2,
caractérisé en ce que
l'une des deux parties du boîtier au moins (fond du boîtier 11, couvercle du boîtier 12),est constituée sous la forme d'une pièce de tôle estampée par emboutissage profond.

4. Appareil électrique selon la revendication 1 ou 3,
caractérisé en ce que
le couvercle du boîtier (12) et le fond du boîtier (11) ainsi que la carte à circuit imprimé (10) présentent au moins dans la zone des moyens de liaison des sections (18, 25) qui s'étendent parallèlement sur lesquelles ils reposent les uns sur les autres.

5. Appareil électrique selon la revendication 4,
caractérisé en ce que
les sections parallèles du couvercle du boîtier (12) et/ou du fond du boîtier (11) sont réalisées par coudage des zones de bordure de la partie correspondante du boîtier.

6. Appareil électrique selon la revendication 5,
caractérisé en ce que
les zones coudées de bordure des parties du boîtier font saillie à l'intérieur du boîtier.

7. Appareil électrique selon l'une des revendications 1 à 6,
caractérisé en ce que
le fond du boîtier (11) et/ou le couvercle du boîtier (12) présente dans la zone des endroits de liaison des sections de fixation (24) ou des sections de support (14) ouvertes vers l'extérieur.
